# EUROPÄISCHE PATENTSCHRIFT

(11) **EP 4 295 451 B1**
(45) Veröffentlichungstag und Bekanntmachung des Hinweises auf die Patenterteilung: **08.04.2026**
(21) Anmeldenummer: 22706743.6
(22) Anmeldetag: 02.02.2022
(51) Int. Cl.: H01R 43/24, H01R 13/405, B29C 45/00, H01R 43/16

(54) **KUNSTSTOFFBAUTEIL MIT STROMSCHIENEN**
PLASTIC COMPONENT HAVING BUS BARS
ÉLÉMENT EN PLASTIQUE À BARRES OMNIBUS

(30) Priorität: 16.02.2021 DE 102021201429
(43) Veröffentlichungstag der Anmeldung: 27.12.2023
(73) Patentinhaber: Robert Bosch GmbH, 70442 Stuttgart (DE)
(72) Erfinder: TESAR, Petr, 37350 Olesnik (CZ)
(86) Internationale Anmeldenummer: PCT/EP2022/052382
(87) Internationale Veröffentlichungsnummer: WO 2022/175079

(56) Entgegenhaltungen:
- EP-A1- 1 408 587
- US-A1- 2018 261 951
- US-A1- 2018 358 732

## Beschreibung

### Stand der Technik

Die Erfindung geht aus von einem Kunststoffbauteil mit Stromschienen nach der Gattung des Hauptanspruchs.

Es ist schon ein Kraftstofffördermodul aus der JP8050046 A2 bekannt, das ein Kunststoffbauteil umfasst, das vom Kunststoff des Kunststoffbauteils umschlossene, metallische Stromschienen aufweist, die zur elektrischen Kontaktierung auf zwei Seiten des Kunststoffbauteils aus dem Kunststoffbauteil an jeweils einer Austrittsfläche herausragen. Nachteilig ist, dass im Kunststoff-Metall-Verbund zwischen den Stromschienen und dem Kunststoff des Kunststoffbauteils durch sogenannte Delaminierung ein Leckagepfad entstehen kann, der von einer Seite des Kunststoffbauteils zur anderen Seite des Kunststoffbauteils führt, so dass Kraftstoffdämpfe aus einem Kraftstofftank in die Atmosphäre gelangen können. Weiterhin ist aus anderem Stand der Technik bekannt, dass Stromschienen jeweils eine im Kunststoff des Kunststoffbauteils liegende Schienenöffnung haben, um die jeweilige Stromschiene im Kunststoff des Kunststoffbauteils mechanisch zu verankern.

US 2018/261951 A1 offenbart ein Kunststoffbauteil nach dem Oberbegriff des Anspruchs 1.

### Vorteile der Erfindung

Das erfindungsgemäße Kunststoffbauteil mit den kennzeichnenden Merkmalen des Hauptanspruchs hat demgegenüber den Vorteil, dass die Entstehung eines Leckagepfades im Kunststoff-Metall-Verbund des Kunststoffbauteils verhindert wird, indem zumindest eine der Stromschienen zumindest eine im Kunststoff des Kunststoffbauteils liegende Schienenöffnung aufweist, die in Richtung der Längserstreckung der jeweiligen Stromschiene gesehen bis an eine der Austrittsflächen des Kunststoffbauteils reicht, insbesondere über die Austrittsfläche hinausreicht, und mit Kunststoff des Kunststoffbauteils befüllt ist.

Durch die in den Unteransprüchen aufgeführten Maßnahmen sind vorteilhafte Weiterbildungen und Verbesserungen des im Hauptanspruch angegebenen Kunststoffbauteils möglich.

Das erfindungsgemäße Kunststoffbauteil nach der Erfindung hat noch den Vorteil, dass der Querschnitt der jeweiligen Stromschiene durch die zumindest eine an die Austrittsfläche reichende Schienenöffnung in Teilquerschnitte geteilt ist und dass jeder Teilquerschnitt von dem Kunststoff des Kunststoffbauteils vollständig umschlossen ist, insbesondere ringförmig oder ringartig. Je quadratischer die gebildeten Teilquerschnitte sind, desto geringer ist die Neigung zur Delaminierung bzw. die Gefahr der Bildung eines Leckagepfades, da die Schrumpfkräfte im Kunststoff über den Umfang des Teilquerschnitts gesehen gleichmäßiger sind als bei einem ungeteilten Querschnitt. Dadurch wird an der Austrittsfläche mit der erfindungsgemäßen Schienenöffnung die Dichtheit zwischen dem Kunststoff des Kunststoffbauteils und den Stromschienen sicher aufrechterhalten.

Weiterhin vorteilhaft ist, wenn die Schienenöffnung eine durch die Stromschiene durchgehende Öffnung ist, die insbesondere kreisförmig oder langlochförmig ausgebildet ist, da auf diese Weise jeder Teilquerschnitt von dem Kunststoff des Kunststoffbauteils vollständig umschlossen werden kann.

Sehr vorteilhaft ist es, wenn die jeweilige Stromschiene zusätzlich zu der zumindest einen an die Austrittsfläche reichenden Schienenöffnung zumindest eine weitere Schienenöffnung aufweist, die im Kunststoff des Kunststoffbauteils zur mechanischen Verankerung der Stromschiene angeordnet ist, insbesondere in Richtung der Längserstreckung der Stromschiene gesehen beabstandet zur zumindest einen an die Austrittsfläche reichenden Schienenöffnung. Auf diese Weise werden die Stromschienen besonders gut im Kunststoffbauteil verankert.

Vorteilhaft ist, die Stromschienen eine Wandung des Kunststoffbauteils durchragen und/oder in einer Wandung des Kunststoffbauteils abschnittsweise eingebettet sind. Auf diese Weise wird im Kunststoffbauteil ein Kunststoff-Metall-Verbund gebildet, der die Stromschienen fixiert und elektrisch isoliert.

Desweiteren vorteilhaft ist, wenn die Stromschienen jeweils an ihren beiden Enden einen Schienenkontakt zur elektrischen Kontaktierung aufweisen, der insbesondere ein Kontaktpin, eine Kontaktzunge, eine Kontaktlasche, ein Kontaktschwert oder eine Kontaktzange ist. Auf diese Weise können die Stromschienen an ihren Enden einfach durch einen elektrischen Anschlussleiter kontaktiert werden, wobei der Anschlussleiter an den Schienenkontakt beispielsweise angelötet, angeschweißt, angesteckt oder angeklebt werden kann.

Darüber hinaus vorteilhaft ist, wenn die Schienenkontakte zumindest auf einer der beiden Seiten des Kunststoffbauteils als Steckerkontakte zur Bildung eines Steckeranschlusses ausgebildet sind. Auf diese Weise können die Schienenkontakte der Stromschienen besonders einfach kontaktiert werden.

Vorteilhaft ist, dass das Kunststoffbauteil durch Spitzgießen hergestellt ist, insbesondere aus einem Thermoplast. Auf diese Weise kann das Kunststoffbauteil besonders kostengünstig hergestellt werden.

Außerdem betrifft die Erfindung eine Vorrichtung zum Fördern von Kraftstoff, insbesondere eine Inline-Kraftstoffpumpe oder ein Kraftstofffördermodul, mit einem erfindungsgemäßen Kunststoffbauteil, wobei das Kunststoffbauteil ein Gehäusedeckel der Inline-Kraftstoffpumpe oder ein Tankflansch des Kraftstofffördermoduls sein kann, wobei der Tankflansch des Kraftstofffördermoduls eine Öffnung eines Kraftstofftanks dicht verschließen kann. Die Dichtheit eines Kunststoffbauteils mit integrierten Stromschienen ist bei Vorrichtungen zum Fördern von Kraftstoff besonders wichtig, um das Entweichen von Kraftstoffdämpfen in die Atmosphäre, insbesondere über potentielle Leckagepfade im Kunststoffbauteil, zu verhindern.

### Zeichnung

Ein Ausführungsbeispiel der Erfindung ist in der Zeichnung vereinfacht dargestellt und in der nachfolgenden Beschreibung näher erläutert.
- Fig.1: zeigt ein Kunststoffbauteil mit erfindungsgemäß integrierten Stromschienen am Beispiel einer Inline-Kraftstoffpumpe,
- Fig.2: eine Detailansicht auf die erfindungsgemäß integrierten Stromschienen in einem Schnitt durch das erfindungsgemäße Kunststoffbauteil nach Fig.1 und
- Fig.3: eine Teilansicht einer der Stromschienen des erfindungsgemäßen Kunststoffbauteils nach Fig.1 und Fig.2.

### Beschreibung des Ausführungsbeispiels

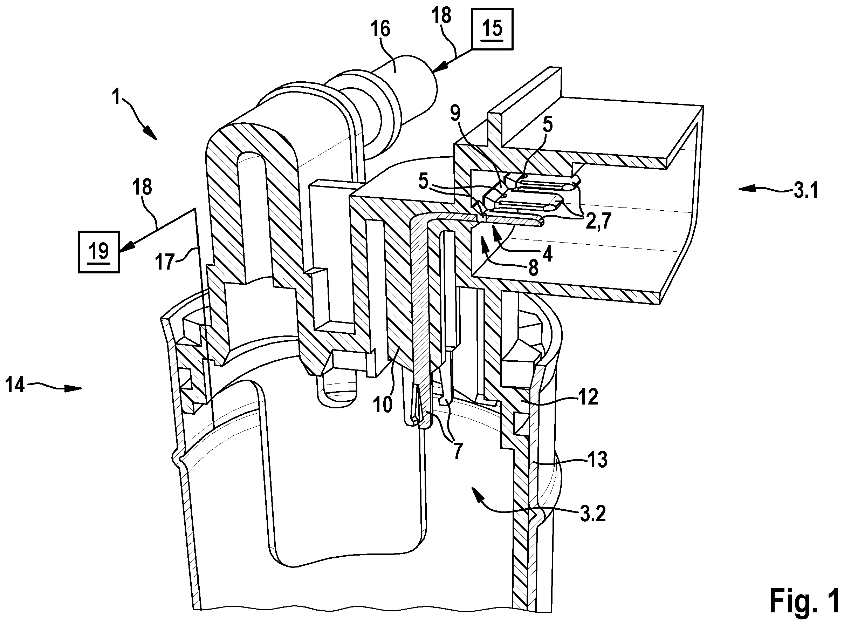

Fig.1 zeigt ein Kunststoffbauteil mit erfindungsgemäß integrierten Stromschienen am Beispiel einer Inline-Kraftstoffpumpe.

Das Kunststoffbauteil 1 weist vom Kunststoff des Kunststoffbauteils 1 umschlossene, insbesondere umspritzte, metallische Stromschienen 2 auf, die zur elektrischen Kontaktierung auf zwei Seiten 3.1,3.2 des Kunststoffbauteils 1 aus dem Kunststoffbauteil 1 an jeweils einer Austrittsfläche 4 herausragen. Das Kunststoffbauteil 1 ist somit ein Verbundbauteil umfassend Kunststoff und im Kunststoff integrierte Stromschienen 2. Das Kunststoffbauteil 1 ist beispielsweise durch Spitzgießen hergestellt, wobei der Kunststoff beispielsweise ein Thermoplast ist.

Die Austrittsfläche 4 ist eine Fläche unmittelbar um eine Austrittsöffnung 8 herum, wobei die jeweilige Stromschiene 2 über die Austrittsöffnung 8 aus dem Kunststoffbauteil 1 herausläuft. Die Austrittsfläche 4 umfasst im Ausführungsbeispiel vier Schrägen 9, die sich an die vier Seiten der jeweiligen Stromschiene 2 anschmiegen.

Die Stromschienen 2 sind elektrisch leitend und dienen der Herstellung einer elektrischen Verbindung zur elektrischen Stromversorgung oder zur Bildung einer Signalverbindung. Die Stromschienen 2 können also eine Phasenschiene oder eine Signalschiene sein. Die Stromschienen 2 haben beispielsweise einen rechteckförmigen Querschnitt und sind aus Blech hergestellt, beispielsweise ausgestanzt.

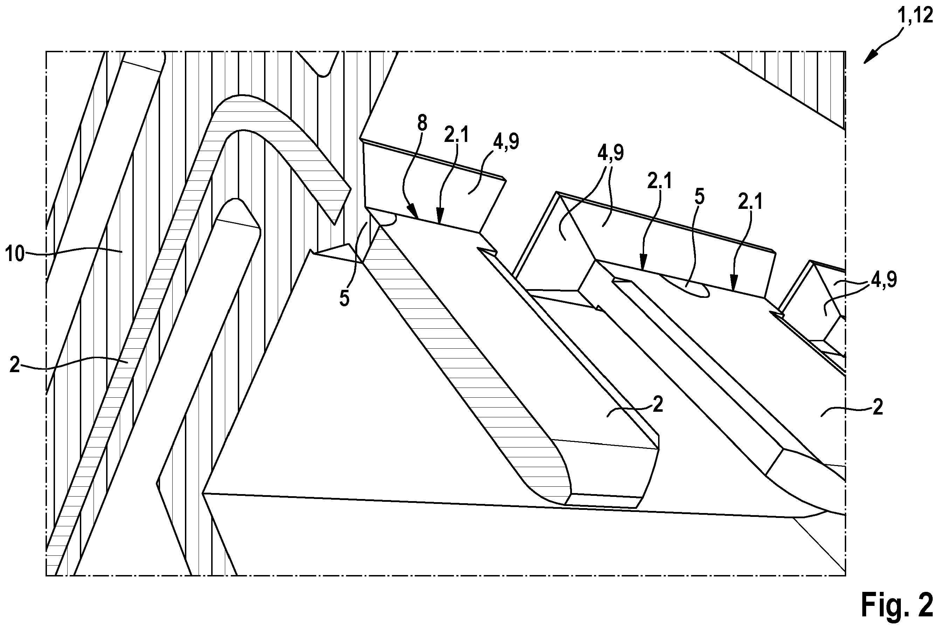

Fig.2 zeigt eine Detailansicht auf die erfindungsgemäß integrierten Stromschienen in einem Schnitt durch das erfindungsgemäße Kunststoffbauteil nach Fig.1.

Erfindungsgemäß ist vorgesehen, dass zumindest eine der Stromschienen 2, beispielsweise jede Stromschiene 2, zumindest an einer Seite 3.1 des Kunststoffbauteils 1 zumindest eine im Kunststoff des Kunststoffbauteils 1 liegende Schienenöffnung 5 aufweist, die in Richtung der Längserstreckung der jeweiligen Stromschiene 2 gesehen bis an die zugehörige Austrittsfläche 4 des Kunststoffbauteils 1 reicht, insbesondere über die Austrittsfläche 4 hinausreicht, und mit Kunststoff des Kunststoffbauteils 1 befüllt ist. Auf diese Weise wird die Entstehung eines Leckagepfades im Kunststoffbauteil 1 entlang der Stromschienen 2 verhindert, da zumindest an der Austrittsfläche 4 mit der erfindungsgemäßen Schienenöffnung 5 die Dichtheit zwischen dem Kunststoff des Kunststoffbauteils 1 und den Stromschienen 2 sichergestellt ist.

Der Querschnitt der jeweiligen Stromschiene 2 ist durch die zumindest eine an die Austrittsfläche 4 reichende Schienenöffnung 5 in Teilquerschnitte 2.1 geteilt, wobei jeder Teilquerschnitt 2.1 von dem Kunststoff des Kunststoffbauteils 1 vollständig umschlossen ist, insbesondere ringförmig oder ringartig.

Die Schienenöffnung 5 ist eine durch die Stromschiene 2 durchgehende Öffnung und kann eine beliebige Form haben, beispielsweise kann diese kreisförmig oder langlochförmig ausgebildet sein.

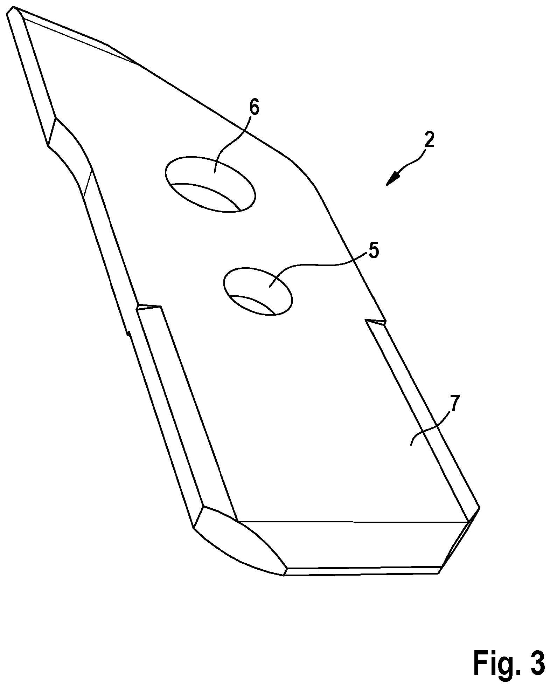

Fig.3 zeigt eine Teilansicht einer der Stromschienen des erfindungsgemäßen Kunststoffbauteils nach Fig.1 und Fig.2.

Die jeweilige Stromschiene 2 kann zusätzlich zu der erfindungsgemäßen Schienenöffnung 5 zumindest eine weitere Schienenöffnung 6 aufweisen, die im Kunststoff des Kunststoffbauteils 1 zur mechanischen Verankerung der Stromschiene 2 vorgesehen und in Richtung der Längserstreckung der Stromschiene 2 gesehen beabstandet zur erfindungsgemäßen Schienenöffnung 5 ist.

Die Stromschienen 2 durchragen im Verlauf durch das Kunststoffbauteil 1, ausgehend von der einen Seite 3.1 zur anderen Seite 3.2 des Kunststoffbauteils 1, eine Wandung 10 des Kunststoffbauteils 1 und sind dadurch in der Wandung 10 des Kunststoffbauteils 1 abschnittsweise eingebettet und/oder fixiert.

Die Stromschienen 2 haben jeweils an ihren beiden Enden zumindest einen Schienenkontakt 7 zur elektrischen Kontaktierung, der beispielsweise ein Kontaktpin, eine Kontaktzunge, eine Kontaktlasche, ein Kontaktschwert oder eine Kontaktzange sein kann. Die Schienenkontakte 7 können zumindest auf einer der beiden Seiten 3.1,3.2 des Kunststoffbauteils 1 als Steckerkontakte zur Bildung eines Steckeranschlusses ausgebildet sein.

Das erfindungsgemäße Kunststoffbauteil 1 kann beispielsweise bei einer Vorrichtung zum Fördern von Kraftstoff eingesetzt werden, nach dem Ausführungsbeispiel beispielsweise bei einer Inline-Kraftstoffpumpe 14. Nach dem Ausführungsbeispiel ist das Kunststoffbauteil 1 ein Gehäusedeckel 12 der Inline-Kraftstoffpumpe 14, der ein zylinderförmiges Pumpengehäuse 13 stirnseitig verschließt. Die Inline-Kraftstoffpumpe 14 ist außerhalb eines Kraftstofftanks 15 angeordnet und über einen Einlass 16 und einen Auslass 17 mit einer Kraftstoffförderleitung 18 verbunden, die von dem Kraftstofftank 15 zu einer Brennkraftmaschine 19 führt. Der Einlass 16 der Inline-Kraftstoffpumpe 14 ist mit einem zum Kraftstofftank 15 führenden Abschnitt und der Auslass 17 mit einem zur Brennkraftmaschine 19 führenden Abschnitt der Kraftstoffförderleitung 18 verbunden.

Das erfindungsgemäße Kunststoffbauteil 1 kann auch ein Deckel sein, der eine Öffnung des Kraftstofftanks 15 dicht verschließt, wie beispielsweise bei einem Tankflansch eines Kraftstofffördermoduls.

Selbstverständlich kann das Kunststoffbauteil 1 auch bei beliebig anderen Anwendungen eingesetzt werden.

## Patentansprüche

1. Kunststoffbauteil (1), das vom Kunststoff des Kunststoffbauteils (1) umschlossene, insbesondere umspritzte, metallische Stromschienen (2) aufweist, die zur elektrischen Kontaktierung auf zwei Seiten (3.1,3.2) des Kunststoffbauteils (1) aus dem Kunststoffbauteil (1) an jeweils einer Austrittsfläche (4) herausragen, wobei zumindest eine der Stromschienen (2) zumindest eine im Kunststoff des Kunststoffbauteils (1) liegende Schienenöffnung (5) aufweist,
**dadurch gekennzeichnet, dass**
die Schienenöffnung (5) in Richtung der Längserstreckung der jeweiligen Stromschiene (2) gesehen bis an eine der Austrittsflächen (4) des Kunststoffbauteils (1) reicht, insbesondere über die Austrittsfläche (4) hinausreicht, und mit Kunststoff des Kunststoffbauteils (1) befüllt ist, dass der Querschnitt der jeweiligen Stromschiene (2) durch die zumindest eine an die Austrittsfläche (4) reichende Schienenöffnung (5) in Teilquerschnitte (2.1) geteilt ist und dass jeder Teilquerschnitt (2.1) von dem Kunststoff des Kunststoffbauteils (1) vollständig umschlossen ist, insbesondere ringförmig oder ringartig.

2. Kunststoffbauteil nach Anspruch 1, **dadurch gekennzeichnet, dass** die Schienenöffnung (5) eine durch die Stromschiene (2) durchgehende Öffnung ist, die insbesondere kreisförmig oder langlochförmig ausgebildet ist.

3. Kunststoffbauteil nach einem der vorhergehenden Ansprüche, **dadurch gekennzeichnet, dass** die jeweilige Stromschiene (2) zusätzlich zu der zumindest einen an die Austrittsfläche (4) reichenden Schienenöffnung (5) zumindest eine weitere Schienenöffnung (6) aufweist, die im Kunststoff des Kunststoffbauteils (1) zur mechanischen Verankerung der Stromschiene (2) angeordnet ist, insbesondere in Richtung der Längserstreckung der Stromschiene (2) gesehen beabstandet zur Schienenöffnung (5).

4. Kunststoffbauteil nach einem der vorhergehenden Ansprüche, **dadurch gekennzeichnet, dass** die Stromschienen (2) eine Wandung (10) des Kunststoffbauteils (1) durchragen und/oder in einer Wandung (10) des Kunststoffbauteils (1) abschnittsweise eingebettet sind.

5. Kunststoffbauteil nach einem der vorhergehenden Ansprüche, **dadurch gekennzeichnet, dass** die Stromschienen (2) jeweils an ihren beiden Enden einen Schienenkontakt (7) zur elektrischen Kontaktierung aufweisen, der insbesondere ein Kontaktpin, eine Kontaktzunge, eine Kontaktlasche, ein Kontaktschwert oder eine Kontaktzange ist.

6. Kunststoffbauteil nach Anspruch 5, **dadurch gekennzeichnet, dass** die Schienenkontakte (7) zumindest auf einer der beiden Seiten (3.1,3.2) des Kunststoffbauteils (1) als Steckerkontakte zur Bildung eines Steckeranschlusses ausgebildet sind.

7. Kunststoffbauteil nach einem der vorhergehenden Ansprüche, **dadurch gekennzeichnet, dass** das Kunststoffbauteil (1) durch Spitzgießen hergestellt ist, insbesondere aus einem Thermoplast.

8. Vorrichtung zum Fördern von Kraftstoff, insbesondere Inline-Kraftstoffpumpe oder Kraftstofffördermodul, mit einem Kunststoffbauteil (1) nach einem der vorhergehenden Ansprüche.

9. Vorrichtung nach Anspruch 8, **dadurch gekennzeichnet, dass** das Kunststoffbauteil (1) ein Gehäusedeckel der Inline-Kraftstoffpumpe oder ein Tankflansch des Kraftstofffördermoduls ist.

## Claims

1. Plastics component (1) which has metal busbars (2) which are enclosed, in particular encapsulated, by the plastic of the plastics component (1) and protrude from the plastics component (1) at a respective outlet surface (4) on two sides (3.1, 3.2) of the plastics component (1) for electrical contact-connection, wherein at least one of the busbars (2) has at least one busbar opening (5) lying in the plastic of the plastics component (1),
**characterized in that**
the busbar opening (5), as seen in the direction of the longitudinal extent of the respective busbar (2), reaches one of the outlet surfaces (4) of the plastics component (1), in particular reaches beyond the outlet surface (4), and is filled with plastic of the plastics component (1), **in that** the cross section of the respective busbar (2) is divided into partial cross sections (2.1) by the at least one busbar opening (5) reaching the outlet surface (4), and **in that** each partial cross section (2.1) is completely enclosed, in particular in a ring-shaped or ring-like manner, by the plastic of the plastics component (1).

2. Plastics component according to Claim 1, **characterized in that** the busbar opening (5) is an opening which is continuous through the busbar (2) and which is in particular of circular or slot-shaped form.

3. Plastics component according to either of the preceding claims, **characterized in that** the respective busbar (2) has, in addition to the at least one busbar opening (5) reaching the outlet surface (4), at least one further busbar opening (6) which is arranged in the plastic of the plastics component (1), in particular at a spacing from the busbar opening (5) as seen in the direction of the longitudinal extent of the busbar (2), for mechanical anchoring of the busbar (2).

4. Plastics component according to any of the preceding claims, **characterized in that** the busbars (2) protrude through a wall (10) of the plastics component (1) and/or are embedded in a wall (10) of the plastics component (1) in certain portions.

5. Plastics component according to any of the preceding claims, **characterized in that** the busbars (2) each have, at their two ends, a busbar contact (7) for electrical contact-connection, which is in particular a contact pin, a contact tongue, a contact tab, a contact blade or a contact clamp.

6. Plastics component according to Claim 5, **characterized in that** the busbar contacts (7) at least on one of the two sides (3.1, 3.2) of the plastics component (1) are formed as plug contacts for forming a plug connection.

7. Plastics component according to any of the preceding claims, **characterized in that** the plastics component (1) is produced by injection moulding, in particular from a thermoplastic.

8. Device for delivering fuel, in particular in-line fuel pump or fuel delivery module, comprising a plastics component (1) according to any of the preceding claims.

9. Device according to Claim 8, **characterized in that** the plastics component (1) is a housing cover of the in-line fuel pump or a tank flange of the fuel delivery module.

## Revendications

1. Élément en plastique (1) comportant des barres omnibus métalliques (2) entourées, en particulier par surmoulage, par la matière plastique de l'élément en plastique (1) et faisant saillie hors de l'élément en plastique (1) sur une face de sortie (4) sur deux côtés (3.1, 3.2) de l'élément en plastique (1) pour une mise en contact électrique, au moins l'une des barres omnibus (2) présentant au moins une ouverture de barre (5) située dans la matière plastique de l'élément en plastique (1),
**caractérisé en ce que**
l'ouverture de barre (5), vue dans la direction d'extension longitudinale de la barre omnibus (2) respective, s'étend jusqu'à l'une des faces de sortie (4) de l'élément en plastique (1), en particulier au-delà de la face de sortie (4), et est remplie de matière plastique de l'élément en plastique (1), **en ce que** la section transversale de la barre omnibus (2) respective est divisée en sections transversales partielles (2.1) par ladite au moins une ouverture de barre (5) qui atteint la face de sortie (4), et **en ce que** chaque section transversale partielle (2.1) est entièrement entourée, en particulier sous une forme annulaire ou en anneau, par la matière plastique de l'élément en plastique (1).

2. Élément en plastique selon la revendication 1, **caractérisé en ce que** l'ouverture de barre (5) est une ouverture traversant la barre omnibus (2), en particulier sous forme circulaire ou de trou oblong.

3. Élément en plastique selon l'une quelconque des revendications précédentes, **caractérisé en ce qu'**en plus de l'ouverture de barre (5) s'étendant jusqu'à la face de sortie (4), la barre omnibus (2) respective présente au moins une autre ouverture de barre (6) disposée dans la matière plastique de l'élément en plastique (1) pour l'ancrage mécanique de la barre omnibus (2), en particulier à distance de l'ouverture de barre (5) dans la direction d'extension longitudinale de la barre omnibus (2).

4. Élément en plastique selon l'une quelconque des revendications précédentes, **caractérisé en ce que** les barres omnibus (2) traversent une paroi (10) de l'élément en plastique (1) et/ou sont noyées par tronçons dans une paroi (10) de l'élément en plastique (1).

5. Élément en plastique selon l'une quelconque des revendications précédentes, **caractérisé en ce que** les barres omnibus (2) présentent respectivement, à leurs deux extrémités, un contact de barre (7) pour la mise en contact électrique, qui est en particulier une broche de contact, une lame de contact, une patte de contact, un plot de contact ou une languette de contact.

6. Élément en plastique selon la revendication 5, **caractérisé en ce que** les contacts de barre (7) sont réalisés, au moins sur l'un des deux côtés (3.1, 3.2) de l'élément en plastique (1), sous forme de contacts enfichables pour former une connexion enfichable.

7. Élément en plastique selon l'une quelconque des revendications précédentes, **caractérisé en ce que** l'élément en plastique (1) est fabriqué par moulage par injection, en particulier à partir d'une matière thermoplastique.

8. Dispositif d'alimentation en carburant, en particulier pompe à carburant en ligne ou module d'alimentation en carburant, comportant un composant en plastique (1) selon l'une quelconque des revendications précédentes.

9. Dispositif selon la revendication 8, **caractérisé en ce que** l'élément en plastique (1) est un capot de carter de la pompe à carburant en ligne ou une bride de réservoir du module d'alimentation en carburant.
